Europäisches Patentamt

European Patent Office

Office européen des brevets

(19)

(11) Veröffentlichungsnummer : **0 093 181**
**B2**

(12) **NEUE EUROPÄISCHE PATENTSCHRIFT**

(45) Veröffentlichungstag der neuen Patentschrift :
13.12.89

(51) Int. Cl.⁴ : **B 23 B 33/00**

(21) Anmeldenummer : 82103666.2

(22) Anmeldetag : 29.04.82

(54) Verfahren zur Drehmitnahme von Werkstücken.

(73) Patentinhaber : **Wilhelm Hegenscheidt Gesellschaft mbH**
**Neusser Strasse 3**
**D-5140 Erkelenz (DE)**

(72) Erfinder : **Wittkopp, Helmut, Dipl.-Ing.**
**Kasanushof 87**
**D-5140 Erkelenz (DE)**
Erfinder : **Tietenberg, Horst**
**Lerchenweg 7**
**D-4050 Mönchengladbach 4 (DE)**
Erfinder : **Kunze, Bernhard**
**Corneliushof 8**
**D-5140 Erkelenz (DE)**

(74) Vertreter : **Liermann, Manfred**
**Josef-Schregel-Strasse 19**
**D-5160 Düren (DE)**

(43) Veröffentlichungstag der Anmeldung :
**09.11.83 Patentblatt 83/45**

(45) Bekanntmachung des Hinweises auf die Patenterteilung : **12.02.86 Patentblatt 86/07**

(45) Bekanntmachung des Hinweises auf die Entscheidung über den Einspruch : **13.12.89 Patentblatt 89/50**

(84) Benannte Vertragsstaaten :
**DE FR GB IT**

(56) Entgegenhaltungen :
**DE—A— 1 194 224**
**DE—A— 1 231 997**
**DE—A— 1 577 393**
**DE—B— 1 116 504**
**DE—C—  207 829**
**DE—C—  309 867**
**DE—C—  484 870**
**GB—A— 1 133 928**
**US—A— 4 083 271**
**"Eisenbahntechnische Rundschau" September 1961**
**"Die Bundesbahn" September 1964**
**Röhm "Taschenbuch für Spannzeuge" 1973**

**Beschreibung**

Die Erfindung betrifft ein Verfahren zur Drehmitnahme von Eisenbahnradsätzen oder ähnlichen Werkstücken, durch mit dem Werkstück in Arbeitskontakt bringbare und um eine Werksrückrotationsachse umlaufen angetriebene axial bewegliche Stirnseitenmitnehmer einer Radsatsdrehmaschine sowie eine Drehmaschine hierzu.

Verfahren der o. gen. Art sind im Stand der Technik weit verbreitet bekannt. Insbesondere bei Radsatzdrehmaschinen werden die Eisenbahnradsätze in der Radsatzdrehmaschine über Radial- oder Axialmitnehmer eingespannt und angetrieben. Die jeweiligen Mitnehmer sind in dem Breich, in dem sie mit dem Werkstück in Arbeitskontakt oder Mitnahmekontakt kommen, verzahnt oder grob profiliert. Diese Verzahnung oder Profilierung wird in den Werkstoff des Werkstücks hineingepresst, wodurch eine gute Mitnahmekraftübertragung erzielt werden soll. Nach dem gleichen Prinzip arbeiten auch alle im Stand der Technik bekannten und gebräuchlichen sog. Stirnseitenmitnehmer.

Mitnehmer, deren Mitnehmerflächen verzahnt oder grob profiliert sind, hinterlassen notwendigerweise Kerbverletzungen am Werkstück. Insbesondere bei Eisenbahnrädern und Eisenbahnradsätzen sind solche Kerbverletzungen äußerst unerwünscht, weil sie zu Dauerbrüchen fuhren können.

Mit der DE-A-1 577 393 ist eine Rundschleifmaschine bekannt geworden, bei der das Werkstück über glatte Stirnseitenmitnehmer in Drehung versetzt wird Solche glatten Stirnseitenmitnehmer wurden jedoch nur eingesetzt, wenn nur sehr geringe Umfangskräfte zu übertragen waren. Bei größerem Kräftebedarf wurden die Stirnseitenmitnehmer wieder verzahnt ausgebildet oder mit Schneiden bestückt.

Der Erfindung liegt daher die Aufgabe zugrunde, ein Verfahren der eingangs beschriebenen Art vorzuschlagen, mit welchem eine ausreichende Drehmitnahme erreicht und gleichzeitig die bisher auftretenden Kerben vermieden werden können. Weiterhin ist es Aufgabe der Erfindung, eine Einrichtung zur Durchführung dieses Verfahrens vorzuschlagen.

Erfindungsgemäß wird diese Aufgabe bei einem Verfahren der eingangs beschriebenen Art dadurch gelöst, daß die Mitnehmer, glatte unprofilierte Mitnehmerflächen aufweisen, und daß mindestens die Oberflächenbereiche, die mit dem Mitnehmern in Arbeitskontakt kommen, vorher von reibungsmindernden Belägen gereinigt und nachfolgend die Mitnehmer über Mitnehmerflächen gegen die gereinigten Oberflächenbereiche angepresst werden. Durch die Verwendung von Mitnehmerflächen, die nicht verzahnt oder grob profiliert, sondern einfach glatt und unprofiliert sind, die gegen metallisch blanke Oberflächen des Werkstückes angepresst werden, ist es möglich, trotz der relativ glatten, aneinander anliegenden Flächen Mitnahmekräfte in einer solchen Größenordnung zu übertragen, die den von grob profilierten oder verzahnten Mitnehmern übertragenen Mitnahmekräften nicht nachstehen. Gleichzeitig können die gefürchteten Kerben vermieden werden.

Nach einer Ausgestaltung der Erfindung wird vorgeschlagen, daß auch die Mitnehmerflächen von reibungsmindernden Belägen gereinigt werden, bevor sie gegen die gereinigten Oberflächenbereiche angepresst werden. Hierdurch wird erreicht, daß reibungsmindernde Ablagerungen aus der Luft, wie z. B. Öldämpfe, beseitigt werden. Dies kann z. B. durch automatisches oder manuelles Abreiben der Mitnehmerflächen mit einem geeigneten Lösungsmittel erfolgen. Je nach Umweltbelastung kann auch ein Abreiben von Zeit zu Zeit ausreichend sein.

Nach einer Ausgestaltung der Erfindung wird noch vorgeschlagen, daß zwischen gereinigtem Oberflächenbereich und Mitnehmerfläche ein reibungsverstärkendes Mittel eingebracht wird. Durch diese Maßnahme ist es möglich, die übertragbare Mitnehmerkraft weiter zu steigern.

Nach einer weiteren Ausgestaltung der Erfindung wird vorgeschlagen, daß das reibungsverstärkende Mittel ein klebemittel ist. Ein Klebemittel, das zwischen dem gereinigten Oberflächenbereich des Werkstückes und einer Mitnehmerfläche eingebracht ist, ist in der Lage, sehr hohe Scherspannungen zu übertragen. Hierdurch wird eine weitere Steigerung der übertragbaren Mitnehmerkräfte möglich. Gleichzeitig hat ein solches Klebemittel die Eigenschaft, nur geringe Zugspannung übertragen zu können, wodurch der Mitnehmer mit relativ geringen Kräften senkrecht zur Mitnehmerfläche das Klebemittel zerreißen kann, wodurch die während des Antriebs günstige Klebeverbindung auch leicht wieder gelöst werden kann.

Zur Durchführung des erfindungsgemäßen Verfahrens wird eine Radsatzdrehmaschine, mit um die Maschinenachse rotierend angetriebenen axial beweglichen Stirnseitenmitnehmern vorgeschlagen, bei welcher die Mitnehmer glatte, unprofilierte Mitnehmerflächen aufweisen. Diese glatten, unprofilierten Mitnehmerflächen können gegen die blanke Bereiche, die für die Mitnahme vorgesehen sind, angepresst werden. Dies bedeutet, daß die Mitnehmer in üblicher Art gegen das Werkstück gepresst werden können. Es kommen dann lediglich nicht Zähne oder grob profilierte Bereiche des Mitnehmers, sondern ein glatte Fläche des Mitnehmers zur Anlage am Werkstück. Mit dieser einfachen Maßnahme kann der angestrebte Effekt erzielt werden. Gleichzeitig wird hierdurch der Vorteil erreicht, daß die Mitnehmer in ihrem Aufbau einfacher gehalten sein können. Es ist sogar möglich ein unbehandeltes Werkstück in die Maschine einzuspannen und die Mitnehmerflächen zunächst mit einer Kraft geringer als die endgültige Spannkraft anzulegen, dabei das Werkstück zu blockieren und n diesem Zustand die Mitnehmer am Werkstück entlang durch Einschalten des Hauptantriebes durchrutschen zu lassen. Auf diese Art und Weise kann am Werkstück selbst eine metallisch blanke Oberfläche geschaffen werden, gegen die dann die Mitnehmerflächen mit der erforderlichen Anpresskraft angelegt werden können. Damit die Blockadekräfte am Werkstück, beispielsweise an einem Eisenbahnradsatz, nicht zu groß werden, können an beiden Seiten die Planscheiben, die bei solchen Maschinen überlicherweise die Mitnehmer tragen, gleichzeitig, aber jeweils entgegengesetzt, angtrieben werden. Auf diese Art und Weise heben sich die Kräfte weitgehend auf und es müssen nur noch Differenzkräfte aufgefangen werden.

In weiterer Ausgestaltung der Erfindung wird vorgeschlagen, daß die Mitnehmerflächen im mikrogeometrischen Bereich rauh sind. Hierdurch kann insgesamt die Mitnahmekraft verbessert werden und insbesondere die Wirkung eines Klebers, der zwischen Werkstück und Mitnehmerfläche eingebracht wird, verbessert werden.

In weiterer Ausgestaltung der Erfindung ist vorgesehen, daß die Mitnehmer mindestens im Bereich der Mitnehmerflächen aus friktionserhöhendem Werkstoff bestehen. Durch diese Auswahl eines geeigneten Werkstoffes kann ebenfalls die übertragbare Mitnehmerkraft weiter gesteigert werden.

In weiterer Ausgestaltung der Erfindung wird noch vorgeschlagen, daß die Drehmaschine eine Einrichtung zum Einbringen von reibungsverstärkenden Mitteln zwischen die für die Mitnahme bestimmten Werkstückoberflächenbereiche und die Mitnehmerflächen aufweist. Mit dieser Maßnahme wird die Durchführung des erfindungsgemäßen Verfahrens erheblich erleichtert.

Schließlich ist nach einer Ausgestaltung der Erfindung noch vorgeschlagen, daß die Mitnehmerflächen aus handelsüblichem Bremsbelag bestehen. Dies ist ein besonders geeigneter Werkstoff, um Kräfte unter Ausnutzung von Reibung zu übertragen.

Die Erfindung soll nun anhand der beigefügten Zeichnungen näher erläutert werden.

Es zeigen :

Figur 1 Radsatzdrehmaschine in Vorderansicht

Figur 2 Radsatzdrehmaschine nach Figur 1 in Draufsicht

Figur 3 Ausschnittvergrößerung eines einzelnen Mitnehmers aus der zugeordneten Planscheibe

Figur 4 Seitenansicht des Rades eines Radsatzes mit Einspannoberflächenbereich.

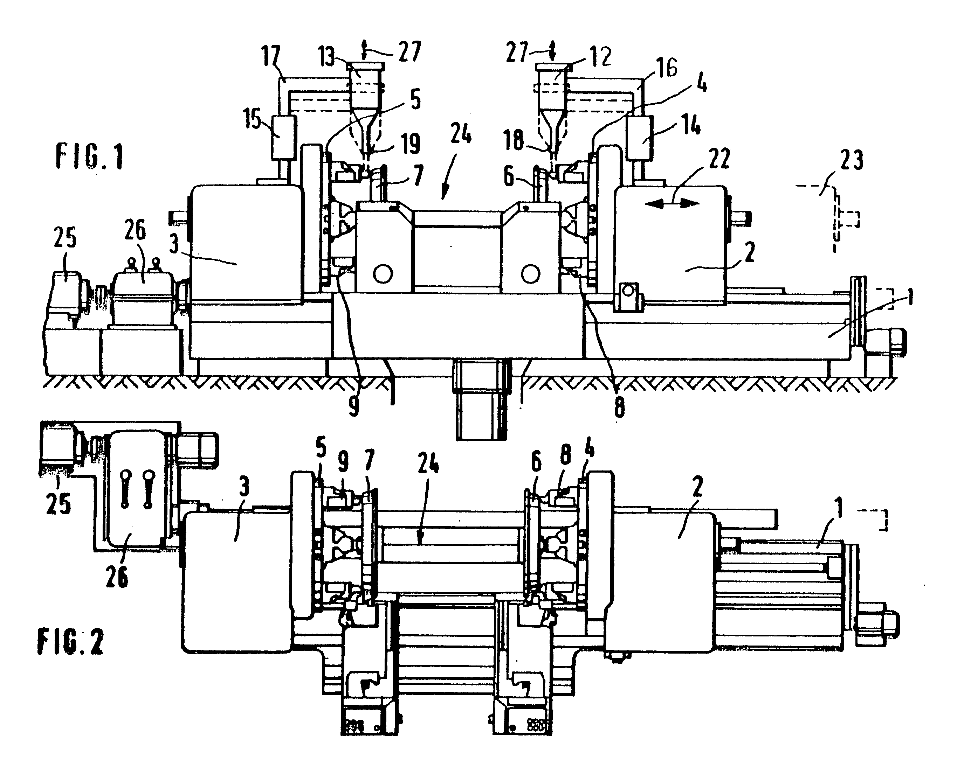

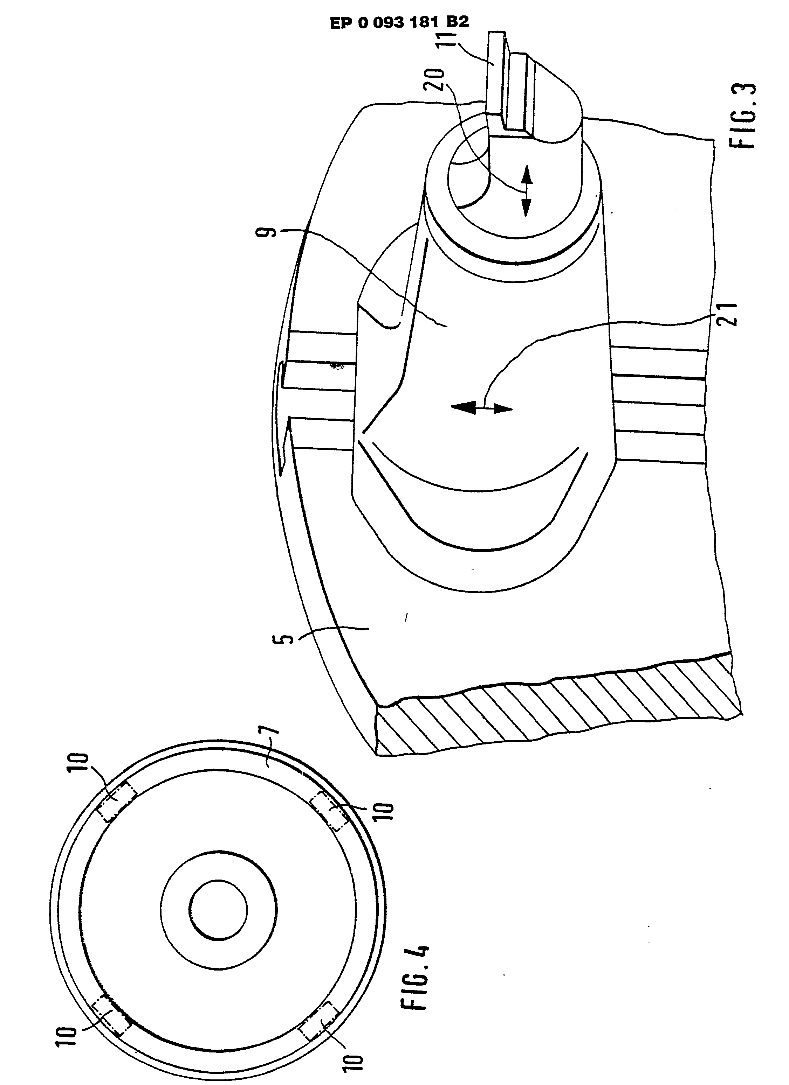

In bei Radsatzdrehmaschinen üblicher und bekannter Weise ist auf einem Maschinenbett 1 ein rechter Spindelstock 2 mit einer Planscheibe 4 sowie ein linker Spindelstock 3 mit einer Planscheibe 5 angeordnet. Mindestens eine der beiden Planscheiben 4 und 5 ist drehangetrieben. Im Ausführungsbeispiel ist dies die Planscheibe 5, die über einen Hauptmotor 25 und das Getriebe 26 angetrieben ist. Der rechte Spindelstock 2 ist in Richtung des Pfeiles 22 auf dem Maschinenbett 1 verschieblich angeordnet und kann hierdurch aus der dargestellten Anordnung bis in die Endlage 23 zurückgezogen werden. Auf der Planscheibe 4 bzw. 5 sind Mitnehmer 8 bzw. 9 angeordnet, die in bekannter Weise in radialer Richtung in Richtung des Pfeiles 21 (Figur 3) zur Durchmesereinstellung und in Richtung des Pfeiles 20 (Figur 3) zur Anlage an ein Werkstück beweglich sind. Da es sich im Ausführungsbeispiel um eine Radsatzdrehmaschine handelt, sei das einzuspannende Werkstück ein Radsatz 24 mit seinen beiden Rädern 6 und 7. Im Ausführungsbeispiel soll der Radsatz über Stirnseitenmitnehmer mitgenommen, also drehangetrieben werden Hierzu weist jeweils die äußere Stirnseite des Rades 6 und 7 mindestens in dem Oberflächenbereich 10, in dem jeweils die Mitnehmer zur Anlage kommen sollen, eine von reibungsmindernden Belägen gereinigte Oberfläche auf. Zum Einspannen in die Maschine und zur Drehmitnahme wird der Radsatz 24 über bekannte Einrichtungen in der Maschine auf Körnerspitzenhöhe angehoben und zunächst über in die Körnerbohrungen der Radsatzachse einfahrende, hier nicht näher dargestellte Körnerspitzen in dieser Lage gehalten. Danach können die Mitnehmer 8 und 9 radial in Richtung des Pfeiles 21 (Figur 3) so verfahren werden, daß sie die für eine Einspannung richtige Durchmesserlage einnehmen. Wenn der Radsatz 24 von den Körnerspitzen der Radsatzdrehmaschine aufgenommen worden ist, befinden sich die Spindelstöcke 2 und 3 in der in den Figuren 1 und 2 dargestellten Position. Ist die jeweils äußere Stirnseite des Rades 6 bzw. 7 nur bereichsweise von reibungsmindernden Belägen gereinigt (Figur 4), so muß der Radsatz so gedreht werden, daß sich die Bereiche dort befinden, wo sie von den Mitnehmern 8 bzw. 9 auch erreicht werden können. Ist die gesamte Stirnseite des jeweiligen Rades 6 und 7 gereinigt, ist eine solche Positionierung nicht erforderlich.

Die Mitnehmer 8 bzw. 9 weisen eine glatte Mitnehmerfläche 11 auf, die für die nach dem Ausführungsbeispiel vorgesehene Stirnseitenmitnahme in Richtung des Pfeiles 20 gegen die mindestens in den Spannbereichen in der genannten Art gereinigten Stirnseiten der Räder 6 bzw. 7 angepresst werden. Auf diese Art und Weise ist die erforderliche Drehmitnahmeverbindung bewirkt und es kann die Bearbeitung des Radsatzes in üblicher Weise beginnen. Da nunmehr glatte Flächen gegeneinander liegen, ist die gefürchtete Einsparinkerbe, die sehr häufig zu Dauerbrüchen geführt hat, vermieden. Dennoch wird wegen der aneinander liegenden und von reibungsmindernden Belägen gereinigten Flächen eine Mitnahmekraft in bisheriger Größenordnung erreicht.

Da die blanke, glatte Mitnahmefläche der Mitnehmer 8 oder 9 stets mit einer entsprechend gereinigten Gegenfläche des Werkstückes in Berührung kommt, bleibt sie unter normalen Verhältnissen auch stets sauber. Bei erhöter Umweltbelastung ist es jedoch möglich, daß sich nach einiger Zeit z. B Ölablagerungen aus der Luft hierauf absetzen, die dann reibmindernd wirken

Es ist daher zweckmässig, von Zeit zu Zeit oder, je nach Höhe der Umweltbelastung, vor jeder Einspannung die Mitnehmerflächen 11 mit einem geeigneten Lösungsmittel abzureiben und hierdurch wieder von reibungsmindernden Belägen zu befreien. Dies kann automatisch oder manuell geschehen.

Es ist natürlich auch möglich glatte Mitnehmerflächen anstatt axial radial gegen entsprechend gereinigte Gegenflächen des Werkstückes anzulegen. Auch eine gleichzeitige radiale und axiale Anlage von glatten Mitnehmerflächen gegen entsprechend gereinigte Gegenflächen eines Werkstückes sind möglich.

Die im Ausführungsbeispiel dargestellte Radsatzdrehmaschine weist im Bereich der Spindelstöcke 2 und 3 Einrichtungen 12 und 13 auf, die von Tragarmen 16 bzw. 17 gehalten, über Absenkeinrichtungen 14 bzw. 15 in Richtung der Pfeile 27 auf und ab bewegt werden können. Die Einrichtungen 12 und 13 umfassen Vorratsbehälter für reibungsverstärkende Mittel, wie z. B. Klebemittel, die nach dem Absenken der Einrichtungen 12 und 13 automatisch oder durch manuelle Betätigung über die Düsen 18 bzw. 19 gegen den entsprechenden Werkstückoberflächenbereich oder gegen die Mitnehmerflächen 11 gesprüht werden können. Rasch aushärtende oder rasch trocknende Klebemittel sind hierzu besonders geeignet, weil sie hohe Scherspannungen, aber nur geringe Zugspannungen übertragen. Die Fähigkeit, hohe Scherspannungen zu übertragen, vergrößert daher die Mitnahmefähigkeit der Mitnehmer, wobei gleichzeitig die jeweilige Klebestelle durch geringen Kraftaufwand beim Zurückziehen der Mitnehmer in Axialrichtung des Radsatzes — also durch Aufbringung von Zugspannung — gelöst werden kann.

Liste der verwendeten Bezugszeichen

1 Maschinenbett
2 rechter Spindelstock
3 linker Spindelstock
4 rechte Planscheibe
5 linke Planscheibe
6 rechtes Rad
7 linkes Rad
8 rechte Mitnehmer
9 linke Mitnehmer
10 Oberflächenbereich
11 Mitnehmerfläche
12 Einrichtung
13 Einrichtung
14 Absenkeinrichtung
15 Absenkeinrichtung
16 Tragarm
17 Tragarm
18 Düse
19 Düse
20 Pfeil
21 Pfeil
22 Pfeil
23 Endlage
24 Radsatz
25 Hauptmotor
26 Getriebe
27 Pfeil

## Patentansprüche

1. Verfahren zur Drehmitnahme von Eisenbahnradsätzen (24) oder ähnlichen Werkstücken durch mit dem Werkstück in Arbeitskontakt bringbare und um eine Werkstückrotationsachse umlaufend angetriebene, axial bewegliche Stirnseitenmitnehmer (8, 9) einer Radsatzdrehmaschine, dadurch gekennzeichnet, daß die Mitnehmer (8, 9) glatte, unprofilierte Mitnehmerflächen (11) aufweisen und mindestens die Oberflächenbereiche (10), die mit dem Mitnehmer (8, 9) in Arbeitskontakt kommen, vorher von reibungsmindernden Belägen gereinigt und nachfolgend die Mitnehmer (8, 9) über Mitnehmerflächen (11) gegen die gereinigten Oberflächenbereiche (10) angepreßt werden.

2. Verfahren nach Anspruch 1 dadurch gekennzeichnet, daß auch die Mitnehmerflächen (11) von reibungsmindernden Belägen gereinigt werden, bevor sie gegen die gereinigten Oberflächenbereiche angepresst werden.

3. Verfahren nach Anspruch 1 und 2 dadurch gekennzeichnet, daß zwischen gereinigtem Oberflächenbereich (10) und Mitnehmerfläche (11) ein reibungsverstärkendes Mittel eingebracht wird.

4. Verfahren nach Anspruch 1 und 3, dadurch gekennzeichnet, daß das reibungsverstärkende Mittel ein Klebemittel ist.

5. Radsatzdrehmaschine zur Durchführung des Verfahrens nach den Ansprüchen 1 bis 4, mit um die Maschinenachse rotierend angetriebenen, axial beweglichen Stirnseitenmitnehmern (8, 9) dadurch gekennzeichnet, daß die Mitnehmer (8, 9) glatte, unprofilierte Mitnehmerflächen (11) aufweisen.

6. Drehmaschine nach Anspruch 5 dadurch gekennzeichnet, daß die Mitnehmerflächen (11) im mikrogeometrischen Bereich rauh sind.

7. Drehmaschine nach Anspruch 5 oder 6 dadurch gekennzeichnet, daß die Mitnehmer (8, 9) mindestens im Bereich der Mitnehmerflächen (11) aus friktionserhöhendem Werkstoff bestehen.

8. Drehmaschine nach den Ansprüchen 5 bis 7, dadurch gekennzeichnet, daß die Drehmaschine eine Einrichtung (12, 13) zum Einbringen von reibungsverstärkenden Mitteln zwischen die für die Mitnahme bestimmten Werkstuckoberflächenbereiche (10) und die Mitnehmerflächen (11) aufweist.

9. Drehmaschine nach den Ansprüchen 5 bis 8 dadurch gekennzeichnet, daß die Mitnehmerflächen (11) aus handelsüblichem Bremsbelag bestehen.

## Claims

1. Method for driving railroad wheel sets (24) or similar work pieces through frontal driver members (8, 9) of a wheel set turning lathe, the driver members being movable about their axis, rotating about the work piece axis and capable of being brought in contact with the work piece, characterized by the fact that each driver member (8, 9) is provided with a driver face (11) which is substantially smooth and non-profiled, whereby at least such regions of surfaces (10) to be brought in contact with the said driver members (8, 9) have previously been cleaned of friction reducing coatings, following which the driver members (8, 9) are pressed against the cleaned surface areas (10) via their driver faces (11).

2. Method according to claim 1, characterized in that the driver faces (11) are cleaned of friction reducing coatings before they are pressed against the cleaned surface regions.

3. Method according to claims 1 and 2 characterized in that a friction increasing means is brought between the cleaned surface regions (10).

4. Method according to claims 1 and 3 characterized in that the friction increasing means is an adhesive.

5. Wheel set turning lathe for carrying out the method according to claims 1 to 4, with frontal driver members (8, 9) rotating about the machine axis, characterized by the fact that the driver members (8, 9) have smooth, non-profiled driver faces (11).

6. Lathe according to claim 5 characterized in that the driver surfaces (11) are rough in the microgeometric region.

7. Lathe according to claim 5 or 6 characterized in that the driver members consist of friction increasing material at least in the region of the driver surfaces (11).

8. Lathe according to claims 5 to 7 characterized in that the lathe has a device (12, 13) for introducing a friction increasing medium between the workpiece surface regions to be driven and the driver surfaces (11).

9. Lathe according to claims 5 to 8 characterized in that the driver surfaces (11) consist of a brake lining usual in the trade.

## Revendications

1. Procédé d'entraînement de roues d'essieux ferroviaires (24) ou de pièces analogues par des éléments entraîneurs frontaux d'un tour pour roues qui peuvent être déplacés dans le sens axial et être mis en contact de travail avec la pièce à usiner et sont eux-mêmes entraînés dans un mouvement de rotation autour d'un axe de rotation de la pièce à usiner, caractérisé en ce que les éléments entraîneurs (8, 9), présentent des surfaces d'entraînement (11) lisses non profilées, et en ce qu'au moins les zones superficielles (10) qui entrent en contact de travail avec l'élément entraîneur (8, 9) sont préalablement décrassées en vue d'y supprimer les dépôts réduisant les frottements avant d'appliquer sous pression les éléments entraîneurs (8, 9) à l'aide de surfaces d'entraînement (11) contre ces zones superficielles (10) ainsi nettoyées.

2. Procédé selon la revendication 1, caractérisé en ce que, avant d'être appliquées sous pression contre les zones superficielles nettoyées, les surfaces d'entraînement (11) sont également décrassées, en vue d'y supprimer les dépôts entravant le frottement.

3. Procédé selon les revendications 1 et 2, caractérisé en ce que l'on intercale un produit améliorant le frottement entre la zone superficielle (10) nettoyée et la surface d'entraînement (11).

4. Procédé selon les revendications 1 à 3, caractérisé en ce que le produit améliorant le frottement est un produit adhésif.

5. Tour pour l'application du procédé selon les revendications 1 à 4, comportant des éléments entraîneurs frontaux (8, 9), qui peuvent être déplacés dans le sens radial, et sont eux-mêmes entraînés dans un mouvement de rotation autour de l'axe du tour, caractérisé en ce que les éléments entraîneurs (8, 9) présentent des surfaces d'entraînement (11) lisses non profilées.

6. Tour selon la revendication 5, caractérisé en ce que, dans le domaine microgéométrique, les surfaces d'entraînement (11) présentent un aspect rugueux.

7. Tour selon l'une des revendications 5 ou 6, caractérisé en ce que les éléments entraîneurs (8, 9) sont constitués, dans la zone des surfaces d'entraînement (11) au moins, d'un matériau améliorant le frottement.

8. Tour selon les revendications 5 à 7, caractérisé en ce qu'il est équipé d'un dispositif (12, 13) permettant d'introduire des produits améliorant l'effort de frottement entre les zones superficielles (10), de la pièce intervenant dans l'entraînement et les surfaces d'entraînement (11).

9. Tour selon les revendications 5 à 8, caractérisé en ce que les surfaces d'entraînement (11) sont constituées d'une garniture de frein traditionnelle.

EP 0 093 181 B2

FIG.1

FIG.2

1

FIG. 4

FIG. 3

EP 0 093 181 B2